Europäisches Patentamt

European Patent Office

Office européen des brevets

(11) Veröffentlichungsnummer: **0 294 727 B1**

(12) **EUROPÄISCHE PATENTSCHRIFT**

(45) Veröffentlichungstag der Patentschrift: **26.08.92**

(51) Int. Cl.⁵: **F16L 55/12**

(21) Anmeldenummer: **88108961.9**

(22) Anmeldetag: **04.06.88**

(54) **Vorrichtung zum Absperren von Rohrleitungen.**

(30) Priorität: **11.06.87 DE 3719395**
**11.06.87 DE 8708203 U**

(43) Veröffentlichungstag der Anmeldung:
**14.12.88 Patentblatt 88/50**

(45) Bekanntmachung des Hinweises auf die
Patenterteilung:
**26.08.92 Patentblatt 92/35**

(84) Benannte Vertragsstaaten:
**AT BE CH DE ES FR GB GR IT LI LU NL SE**

(56) Entgegenhaltungen:
**DE-U- 7 709 218**
**DE-U- 7 917 047**
**DE-U- 8 132 177**
**US-A- 3 805 844**

(73) Patentinhaber: **WAF GmbH Absperrgeräte und**
**Apparatebau**
**Zum Riegel 15**
**W-6720 Speyer(DE)**

(72) Erfinder: **Seiberth, Arno**
**1. Gartenweg 28**
**W-6720 Speyer(DE)**

(74) Vertreter: **Weiss, Ursula, Dr.**
**Gluckstrasse 3**
**W-6800 Mannheim 1(DE)**

EP 0 294 727 B1

**Beschreibung**

Die Erfindung betrifft eine Vorrichtung zum hydraulischen Absperren von Rohrleitungen mit einem an einem Führungsrohr angebrachten, allseitig ausdehnbaren Absperrkörper, die einen Aufbau zum Aufbringen auf eine Rohrleitung aufweist.

Aus der amerikanischen Patentschrift US-PS 3805844 ist eine derartige Absperrvorrichtung bekannt, bei der ein zusammenfaltbarer ausdehnbarer Beutel verwendet wird. Dieser Beutel wird unter Druck mit Wasser gefüllt, um ihn so auszudehnen, daß er mit dem Rohr in Kontakt kommt. Von außen wird Trockeneis auf das Rohr aufgebracht, damit das Wasser gefriert und einen festen blockierenden Block bildet. Der Nachteil dieser bekannten Vorrichtung besteht darin, daß sie nur zur Absperrung von Rohren verwendet werden kann, die bereits ohne Druck sind. Ferner besteht ein großer Nachteil dieser bekannten Vorrichtung darin, daß sie sehr aufwendig aufgrund der notwendigen Vereisung anzuordnen ist.

Ferner sind konventionelle Absperrblasen bekannt, die durch eine Anbohröffnung in das unter Druck stehende Rohr gegen die Strömungsrichtung des Mediums eingeführt werden. Je nach der Stärke des anstehenden Druckes kann es hierbei zu folgenden Problemen kommen:

Je nach der Größe der abzusperrenden Rohrleitung muß eine entsprechend große Anbohröffnung geschaffen werden, aus der bis zum Aufblasen der Absperrblase Gas entweicht und arbeitendes Personal gefährdet. Der Druck auf das Blasengestänge wird so stark, daß der Haltestopfen aus der Anbohrmuffe herausgedrückt wird.

Beim Anbohren der Rohrleitung entstehen Grate an der Anbohröffnung, die die Absperrblase sowohl beim Setzen als auch beim Ziehen verletzen können und daher undicht werden lassen. Es müssen daher immer gewisse Vorräte an Absperrblasen an der Baustelle vorgehalten werden.

Bei älteren Rohrleitungen kommt es korrosionsbedingt zu Inkrustierungen, die die Absperrblasen ebenfalls zerstören, da die mit Atemluft gefüllten Blasen lediglich durch das umgebende Gewebe geschützt werden, das sehr leicht durch Grate und Inkrustierungen zerstört wird.

Die Größe der Anbohrung erfolgt nicht einheitlich, das heißt die auf dem Blasengestänge der Absperrblasen montierten konischen Gummistopfen lassen unterschiedlich große Anbohröffnungen zu, die, wenn sie zu klein gewählt sind, wiederum einen unverhältnismäßig großen Verschleiß an Absperrblasen zulassen, da sich die Verletzbarkeit aus vorgenannten Gründen erhöht. Eine derartige Absperrblase ist beispielsweise aus dem Gebrauchsmuster DE-U-75 17 541 bekannt.

Seit einigen Jahren gibt es sogenannte Blasensetzgeräte, durch die Absperrblasen in die unter Druck stehende Leitung eingeführt werden, ohne daß dabei Gase austreten. Hierbei übernimmt ein am Ende des Gerätes angebrachte Einführschuh, der in die Rohrleitung hineinragt und am Rohrboden aufsitzt, die Aufgabe, die Absperrblase vor Verletzungen durch die Anbohrgrate geschützt entgegen der Gasrichtung einzuführen. Hierbei bedient man sich des gleichen Prinzips wie bei der von Hand gesetzten Absperrblase. Der Vorteil liegt lediglich darin, daß durch eine Schleuse hindurch die Rohrleitung gasfrei angebohrt und die Absperrblase gasfrei gesetzt und gezogen wird. Es treten jedoch ebenfalls so eklatante Schwierigkeiten beim Setzen oder Ziehen der Absperrblasen auf, daß der Aufwand mit Blasensetztgeräten nicht gerechtfertigt erscheint.

Die Gasabsperrblase muß in einem relativ kleinen Setzrohr untergebracht werden, d. h. es stehen je nach Hersteller Durchmesser von 1 1/2" bis 2" (3,81 cm bis 5,08 cm) zur Verfügung. Die Absperrblase ist mit einem starren Füllrohr über eine Schraubverbindung verbunden und muß, bevor sie im Blasensetzrohr untergebracht werden kann, so zusammengedreht werden, daß sie überhaupt hineinpaßt. Das bereitet gerade bei den größeren Absperrblasen Schwierigkeiten, da das Volumen der Absperrblasen immer größer wird, das Aufnahmevolumen des Setzrohres jedoch gleich bleibt. Nach dem Aufsetzen des Setzrohres auf die Schleuse wird diese geöffnet und die Blase aus dem Setzrohr durch die Schleuse hindurch in die Rohrleitung hineingedrückt. Dabei schlägt das flexible Gestänge der Blase auf den Rohrboden auf und wird durch den anstehenden Gasdruck niedergehalten. Beim Aufblasen verdrehen sich gerade Absperrblasen mit größeren Dimensionen sehr leicht, da ein großes Volumen ausgefüllt werden muß. Durch die beschriebene Schwierigkeit des geringen Volumens der Setzrohre müssen die Absperrblasen notwendigerweise in ihrer Bauart klein gehalten werden, was wiederum zu einer Verkleinerung der Auflagefläche an der Rohrwandung führt. Im ungünstigsten Fall sitzt die Absperrblase so verdreht in der Rohrleitung, daß der Gasstrom praktisch unbehindert weiterströmt und die Absperrblase unter Umständen mehrmals gezogen und wieder gesetzt werden muß.

Enorme Schwierigkeiten gibt es auch beim Ziehen der Absperrblasen. Der relativ klein dimensionierte Schuh behindert das Hereinziehen der Absperrblase in das Setzrohr, da nun die Blase und die Schutzhülle nicht mehr auf den kleinst möglichen Durchmesser zusammengedreht werden können. Das Gewebe der Schutzhülle staut sich vor der Öffnung des Schuhes, was nicht selten dazu führt, daß die Absperrblase vom Gestänge abreißt und vom Gasstrom in die Rohrleitung hineingedrückt wird und verloren ist.

Die Probleme, die dadurch in den Versorgungsleitungen entstehen, wie Verstopfen von kleineren Abzweigen oder der Ausfall von Druckregler oder Verteilerstationen sollen hier nicht weiterverfolgt werden. Desweiteren kann es durch die obengenannten Schwierigkeiten dazu kommen, daß die Absperrblase im Schuh stecken bleibt und nicht mehr zu bewegen ist. Das führt dazu, daß das gesamte Blasensetzgerät einschließlich Schleuse von der unter Druck stehenden Rohrleitung abgebaut werden muß, was zu einer sehr hohen Gefährdung des Personals sowie der Umgebung gerade im innerstädtischen Bereich führt.

Eine Vorrichtung zum Absperren von Gasleitungen mittels eines Blasensetzgerätes wurde beispielsweise in dem Gebrauchsmuster DE-U-78 10 001 beschrieben.

Die der Erfindung zugrundeliegende Aufgabe besteht darin, eine Vorrichtung zum hydraulischen Absperren von Rohrleitungen der eingangs genannten Art vorzuschlagen, mit der es möglich ist, eine gewünschte Einschnürung des dimensionsvariablen Absperrkörpers zu erzielen.

Diese Aufgabe wird erfindungsgemäß dadurch gelöst, daß der Aufbau in seinem Inneren eine Kugelführung aufweist, und daß an der Vorrichtung ein Entlüftungsbügel angeordnet ist, der die Ausdehnung des gefüllten Absperrkörpers an vorgegebener Stelle hindert.

In der Unteransprüchen werden besonders bevorzugte Ausführungsformen der vorliegenden Erfindung beansprucht und näher erläutert.

Diese dimensionsvariablen, hydraulischen Absperrkörper werden durch eine Anbohröffnung in die unter Druck stehende Rohrleitung eingebracht und zwar hauptsächlich vertikal zur Rohrachse.

Nach dem Setzen des Absperrkörpers in die Rohrleitung und Füllen desselben mittels der Hydraulikflüssigkeit wird nach Beendigung des Absperrvorganges die Flüssigkeit aus dem Absperrkörper herausgesaugt, wodurch es möglich wird, die erfindungsgemäße Vorrichtung auf einfache Weise aus der Rohrleitung wieder zu entfernen.

Mit der erfindungsgemäßen Vorrichtung ist es möglich, eine erwünschte künstliche Undichte zu schaffen. Wie beschrieben, dichten die erfindungsgemäßen dimensionsvariablen Absperrkörper Rohrleitungen aller Art absolut ab. Dieser Effekt ist jedoch nicht bei allen Arbeiten an Rohrleitungen erwünscht, beispielsweise bei Trennungen von Rohrleitungen, wobei defekte Leitungsabschnitte aus einer bestehenden Versorgungsleitung entfernt werden müssen. Aus Sicherheitsgründen ist in diesem Fall das herauszutrennende Rohrteil mit einem inerten Gas zu spülen. Dies geschieht zur Zeit mit den bekannten Gasabsperrblasen, die im Inneren einen eigens dafür vorgesehen Durchgang haben.

Bei den bekannten Gasabsperrblasen ist es somit notwendig, insbesonders dafür ausgestaltete Gasabsperrblasen vorzusehen.

Demgegenüber ist bei der erfindungsgemäßen Vorrichtung, dieser enorme Aufwand bei der Produktion nicht mehr nötig.

Erfindungsgemäß werden die dimensionsvariablen Absperrkörper mittels eines Entlüftungsbügels in der Mitte der Anbohrung eingeschnürt und es entstehen da facto zwei Absperrkörper, die einmal auf der Druckseite das Medium hindurchlassen und auf der druckabgewandten Seite weiterhin absolut abdichten. Das eventuell bei stark inkrustierend Rohren auftretende Schleichgas wird in die Setzschleuse abgeleitet, wobei die eingebaute Kugelführung- und Abdichtung den Gasraum auf ein Minimum einschränkt. Über eine Entnahmevorrichtung an der Setzschleuse ist das Messen des anstehenden Druckes möglich.

Dieser Effekt wird vorteilhafterweise durch die Anbringung eines flexiblen Schlauches oder einer Spirale an dem Entlüftungsbügel ermöglicht. Beim Aufpumpen der Absperrkörper wird das flexible Teil durch das sich ausdehnende Material an die Rohrwandung gedrückt und die gewünschte künstliche Undichte geschaffen, die einen höheren Durchsatz an Medium zuläßt.

Das Material des Entlüftungsbügels kann sowohl starr oder flexibel, Kunststoff oder Metall sein.

Der Entlüftungsbügel muß die Absperrkörper ebenfalls nicht ganz umfassen. Es genügt beispielsweise auch eine Hälfte bzw. eine Ausführung, die das Abdichten in der Anbohrmuffe unterbricht.

Eine weitere Eigenschaft des Entlüftungsbügels ist der Schutz vor Anbohrspänen, die zwangsläufig auf den Rohrboden fallen und durch die verschiedenen Methoden, wie Magneteinsatz oder Wegblasen, nicht restlos entfernt werden.

Die Erfindung wird nun anhand der beigefügten Zeichnungen näher erläutert.

Es zeigen:

Figur 1 einen Schnitt durch die erfindungsgemäße Vorrichtung, die mittels eines Aufbaues auf einer Rohrleitung angeordnet ist,

Figur 2 eine Schnitt durch einen Teil der in Figur 1 dargestellten Vorrichtung im nicht gefüllten Zustand und

Figur 3 die Seitenansicht der in Figur 2 dargestellten Vorrichtung gemäß der Linie I-I.

Die erfindungsgemäßen Hydraulik-Absperrkörper dehnen sich selbst unter starkem Gegendruck gleichmäßig nach drei Richtungen aus. Durch dieses enorme Ausdehnungsverhalten entfällt unter anderem der Haltestopfen, wie ihn konventionelle Absperrblasen benötigen. Da die Hydraulik-Absperrkörper sich bis weit in die Anbohrmuffe ausdehnen, entsteht unter anderem der Effekt der formschlüssigen Sicherung.

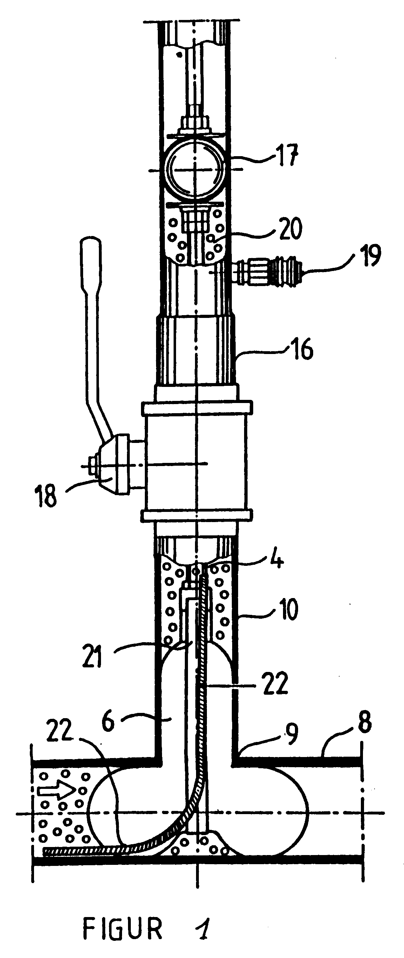

Gemäß Figur 1 ist eine erfindungsgemäße Vorrichtung mittels des Aufbaues 16 auf der Rohrleitung 8 angeordnet. Die Rohrleitung 8 soll abgesperrt werden, jedoch soll aus Sicherheitsgründen der linke Rohrteil mit einem inerten Gas gespült werden. Dies wäre beispielsweise notwendig, wenn im linken Teil defekte Leitungsabschnitte aus einer bestehenden Versorgungsleitung entfernt werden müssen.

Zu diesem Zweck wird die Muffe 10 auf die Rohrleitung 8 aufgeschweißt. Mit Hilfe eines bekannten nicht dargestellten Bohrgerätes wurde unter Dichtbedingungen ein Loch 9 in die Rohrleitung 8 gebohrt. Auf der Muffe 10 wurde nunmehr der Aufbau 16 befestigt, wobei sich im Inneren des Aufbaues 16 diese erfindungsgemäße Vorrichtung befindet.

Gemäß Figur 1 ist der birnenförmige Körper 6 angeordnet. Zusätzlich ist der Entlüftungsbügel 21 angeordnet, der die gewünschte Einschnürung des dimensionsvariablen Absperrkörpers 6 ermöglicht. Dieser Entlüftungsbügel 21 ist in dieser Ausführungsform geschlossen dargestellt. Es ist jedoch auch möglich, daß nur eine Hälfte dieses Bügels den Absperrkörper berührt.

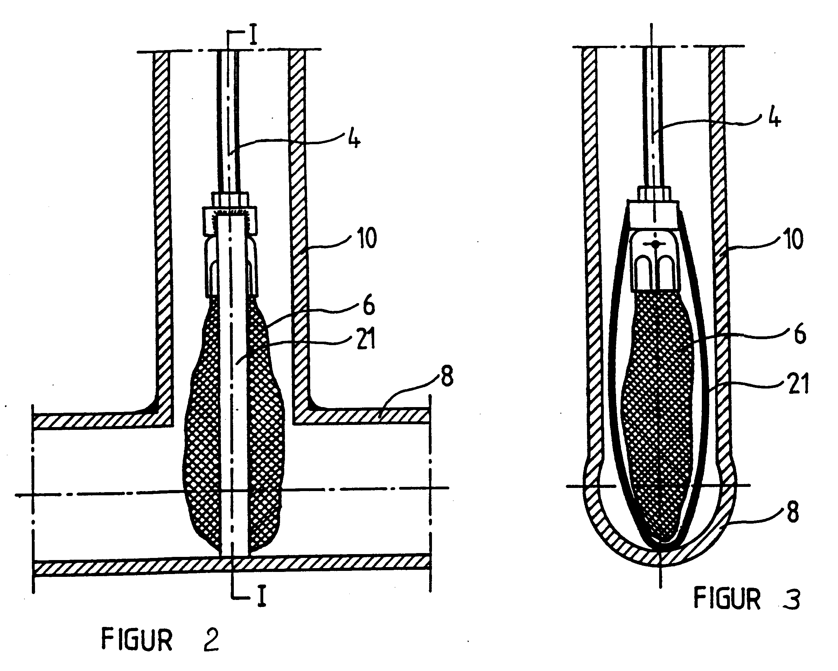

In Figur 2 und Figur 3 ist der untere Teil der erfindungsgemäßen Vorrichtung dargestellt, wobei das Rohr 4 so weit in die Muffe 10 eingeführt wird, bis der Entlüftungsbügel 21 auf dem Boden des Rohres 8 anstößt. Füllt man nunmehr den Absperrkörper, wie bereits oben auf die beschriebene Weise mit der Flüssigkeit, so dehnt er sich aus und die Flüssigkeit bläht den aus dem elastischen Material bestehenden Körper auf. Der Körper 6 legt sich an seiner Oberfläche fugenlos sowohl an die Rohrwandung als auch an die Anbohrmuffe an. Der Entlüftungsbügel 21 verhindert jedoch das Anlegen des Absperrkörpers an die gesamte Innenwandung des Rohres bzw. der Muffe.

Zusätzlich ist an der erfindungsgemäßen Vorrichtung die Spirale 22 befestigt, die sich beim Einführen der Vorrichtung flexibel an die Innenwandung der Anbohrmuffe anschmiegt. Diese Spirale 22 kann auch durch einen flexiblen Schlauch ersetzt werden. Hierbei ist jegliche denkliche Möglichkeit offen, sofern dieses flexible Teil es ermöglicht, daß eine gewünschte künstliche Undichte geschaffen wird. Wie in Figur 1 erkenntlich, liegt die dargestellte Spirale 22 mit ihrem unteren Ende auf dem Boden der Rohrwandung an und ist an dem Entlüftungsbügel 21 befestigt. Hierdurch ist es möglich, entweder durch die Anbohrmuffe den linken Teil des abzusperrenden Rohres mit einem Gas zu spülen, oder im linken Teil befindliches Gas über diese Undichte nach oben zu führen und über ein Ventil abzulassen. Der rechte Teil des Absperrkörpers sperrt den rechten Teil der Rohrleitung 8 ab, wie es bereits oben bei der beschriebenen Ausführungsform der Fall ist.

Es entstehen de facto zwei Absperrkörper, die einmal auf der Druckseite (links gemäß Figur 1) das Medium hindurchlassen und auf der druckabgewandten Seite (rechts gemäß Figur 1) weiterhin absolut abdichten.

Das auftretende Schleichgas wird in die Setzschleuse 20 abgeleitet, wobei die eingebaute Kugelführung 17 und die Abdichtung den Gasraum auf ein Minimum einschränkt. Über die Entnahmevorrichtung 19 an der Setzschleuse 20 ist das Messen des anstehenden Druckes möglich. Über den Kugelhahn 18 kann eine Steuerung des Gases vorgenommen werden.

Das Material des Entlüftungsbügels kann sowohl starr oder flexibel, Kunststoff oder Metall sein.

Die erfindungsgemäßen Absperrvorrichtungen können in die bereits auf dem Markt befindlichen bekannten Setzgeräte problemlos eingebaut werden. Der Vorteil liegt darin, daß

1. der hydraulisch betriebene Absperrkörper nicht mehr um die Kurve eingeführt werden muß, sondern vertikal zur Rohrachse hineingedrückt wird. Das mit einer Schutzeinrichtung versehene Befüll- und Entleehrungsrohr gewährleistet bereits im Moment des Einführens einen sicheren Sitz des Absperrkörpers, ein seitliches Weggleiten ist unmöglich. Zudem steht für das Setzen und Ziehen der Hydraulik-Absperrkörper der gesamte Querschnitt des Setzrohres zur Verfügung.

2. Mit einem Grundkörper können mehrere Nennweiten absolut dicht abgesperrt werden. Durch Evakuierung des Grundkörpers wird das Volumen im entspannten Zustand so klein gehalten, daß er problemlos in die vorhandenen Setzrohre hineinpaßt. Durch den Memory-Effekt des verwendeten neuartigen Materials bildet sich der hydraulisch betriebene Absperrkörper augenblicklich in seine ursprüngliche Form zurück, so daß keine Komplikationen beim Herausziehen aus der Rohrleitung entstehen. Dieser Effekt wird unterstützt, in dem man gleichzeitig eine Hydraulik-Druck-und Saugpumpe einsetzt, die bewirkt, daß das Volumen des Absperrkörpers um minimal 100 % reduziert wird.

3. Durch dieses System kann zudem die angestrebte Standardisierung der Anbohröffnungen erreicht werden.

4. Die Ausdehnungsfähigkeit der hydraulisch betriebenen Zylinder, Birnen, Kugeln, Kegel usw. beträgt 700 %, d. h. das Maß der Ausdehnung im Vergleich zur ursprünglichen Lage entspricht der Auflagefläche im Rohr.

5. Die Absperrkörper zeigen eine halbkugelige Ausformung im Rohr. Durch dieses Phänomen steigt der Druck im Inneren der hydraulischen Absperrkörper an, es kommt zu einer Potenzierung des anstehenden Drucks innerhalb der Absperrkörper, was zu einer weiteren Festigkeit und Versteifung führt. Dieser Effekt wird ermöglicht durch die Verwendung von selbstabstellenden Ventilen, die einen Durckausgleich in das Druckausgleichsgefäß der Druck- und Saugpumps nicht zulassen. Durch diese Anordnung und das Dehnungsverhalten des verwendeten Materials können selbst Druckstöße aufgefangen werden. Diese Angaben sind alle experimentell bewiesen.

6. Durch unterschiedliche Wandstärke bei den verwendeten hydraulischen Absperrkörpern wird eine Beschädigung selbst durch messerscharfe Kanten, Grate, im Rohr verbliebene Späne und Inkrustierungen verhindert.

**Patentansprüche**

1. Vorrichtung zum hydraulischen Absperren von Rohrleitungen mit einem an einem Führungsrohr angebrachten, allseitig ausdehnbaren Absperrkörper, die einen Aufbau (16) zum Aufbringen auf eine Rohrleitung (8) aufweist, dadurch gekennzeichnet, daß der Aufbau (16) in seinem Inneren eine Kugelführung (17) aufweist, und daß an der Vorrichtung ein Entlüftungsbügel (21) angeordnet ist, der die Ausdehnung des gefüllten Absperrkörpers (6) an vorgegebener Stelle hindert.

2. Vorrichtung zum hydraulischen Absperren von Rohrleitungen nach Anspruch 1, dadurch gekennzeichnet, daß der Entlüftungsbügel (21) den Absperrkörper (6) umfaßt.

3. Vorrichtung zum hydraulischen Absperren von Rohrleitungen nach Anspruch 1, dadurch gekennzeichnet, daß eine Hälfte des Entlüftungsbügels den Absperrkörper berührt.

4. Vorrichtung zum hydraulischen Absperren von Rohrleitungen nach Anspruch 1, 2 oder 3, dadurch gekennzeichnet, daß der Entlüftungsbügel (21) mit einem flexiblen Teil (22) verbunden ist, das der gefüllte Absperrkörper (6) an die Innenwand des Rohres (8) drückt.

5. Vorrichtung zum hydraulischen Absperren von Rohrleitungen nach mindestens einem der vorherigen Ansprüche, dadurch gekennzeichnet, daß der Absperrkörper (6) birnenförmig ausgestaltet ist und sich in seinem Inneren ein Stab befindet, der in seinem einen Endbereich durchlöchert und dessen anderes Ende an dem Führungsrohr (4) angebracht ist.

6. Vorrichtung zum hydraulischen Absperren von Rohrleitungen nach mindestens einem der vorherigen Ansprüche, dadurch gekennzeichnet, daß der Absperrkörper zylinderförmig ausgestaltet ist.

7. Vorrichtung zum hydraulischen Absperren von Rohrleitungen nach mindestens einem der vorherigen Ansprüche, dadurch gekennzeichnet, daß über dem Führungsrohr (4) und/oder dem Absperrkörper (6) längsverschiebbar ein Schieber angeordnet ist.

8. Vorrichtung zum hydraulischen Absperren von Rohrleitungen nach mindestens einem der vorherigen Ansprüche, dadurch gekennzeichnet, daß das Führungsrohr (4) biegsam ausgestaltet ist.

9. Vorrichtung zum hydraulischen Absperren von Rohrleitungen nach mindestens einem der vorherigen Ansprüche, dadurch gekennzeichnet, daß der Aufbau an einem Ende mittels eines Deckels und einer Dichtung geschlossen ist, wobei das Führungsrohr (4) längsverschiebbar mittig durch den Deckel und die Dichtung geführt ist.

10. Vorrichtung zum hydraulischen Absperren von Rohrleitungen nach mindestens einem der vorherigen Ansprüche, dadurch gekennzeichnet, daß der Absperrkörper (6) an dem Stab befestigt ist, der seinerseits mittels eines Gewindes auf das Führungsrohr (4) geschraubt ist.

**Claims**

1. Apparatus for hydraulically shutting off pipelines comprising a shutting-off body which is mounted on a guide tube and which is expansible in all directions, the apparatus having an assembly (16) for mounting to a pipeline (8), characterised in that the assembly (16) has a ball guide (17) in its interior and that arranged on the apparatus is a vent loop (21) which prevents expansion of the filled shutting-off body (6) at a predetermined location.

2. Apparatus for hydraulically shutting off pipelines according to claim 1 characterised in that the vent loop (21) embraces the shutting-off body (6).

3. Apparatus for hydraulically shutting off pipelines according to claim 1 characterised in that a half of the vent loop is in contact with the shutting-off body.

4. Apparatus for hydraulically shutting off pipelines according to claim 1, claim 2 or claim 3 characterised in that the vent loop (21) is connected to a flexible member (22) which presses the filled shutting-off body (6) against the inside wall of the pipe (8).

5. Apparatus for hydraulically shutting off pipelines according to at least one of the preceding clams characterised in that the shutting-off body (6) is pear-shaped and disposed in its interior is a bar which is perforated in one end region and the other end of which is mounted to the guide tube (4).

6. Apparatus for hydraulically shutting off pipelines according to at least one of the preceding clams characterised in that the shutting-off body is of a cylindrical configuration.

7. Apparatus for hydraulically shutting off pipelines according to at least one of the preceding claims characterised in that a slider is longitudinally slidably arranged over the guide tube (4) and/or the shutting-off body (6).

8. Apparatus for hydraulically shutting off pipelines according to at least one of the preceding clams characterised in that the guide tube (4) is flexible.

9. Apparatus for hydraulically shutting off pipelines according to at least one of the preceding claims characterised in that the assembly is closed at one end by means of a cover and a seal, wherein the guide tube (4) is longitudinally displaceably guided centrally by the cover and the seal.

10. Apparatus for hydraulically shutting off pipelines according to at least one of the preceding claims characterised in that the shutting-off body (6) is fixed to the bar which in turn is screwed by means of a screwthread on to the guide tube (4).

**Revendications**

1. Dispositif de fermeture hydraulique de tuyauteries, comportant un corps d'arrêt dilatable de tous côtés placé sur un tube de guidage, qui présente un accessoire (16) pour sa mise en place sur une tuyauterie (8), caractérisé en ce que l'accessoire (16) présente à l'intérieur un guide à sphère (17) et en ce qu'il est prévu sur le dispositif un étrier d'aération (21) qui empêche la dilatation du corps d'arrêt (6) rempli, en un point donné.

2. Dispositif de fermeture hydraulique de tuyauteries selon la revendication 1, caractérisé en ce que l'étrier d'aération (21) entoure le corps d'arrêt (6).

3. Dispositif de fermeture hydraulique de tuyauteries selon la revendication 1, caractérisé en ce qu'une moitié de l'étrier d'aération est en contact avec le corps d'arrêt.

4. Dispositif de fermeture hydraulique de tuyauteries selon la revendication 1, 2 ou 3, caractérisé en ce que l'étrier d'aération (21) est relié à une partie flexible (22) qui presse le corps d'arrêt (6) rempli contre la paroi intérieure de la tuyauterie (8).

5. Dispositif de fermeture hydraulique de tuyauteries selon l'une au moins des revendications précédentes, caractérisé en ce que le corps d'arrêt (6) a la forme d'une poire et contient à l'intérieur une barre qui est percée de part en part dans l'une de ses zones terminales et dont l'autre extrémité est placée sur le tube de guidage (4).

6. Dispositif de fermeture hydraulique de tuyauteries selon l'une au moins des revendications précédentes, caractérisé en ce que le corps d'arrêt est de forme cylindrique.

7. Dispositif de fermeture hydraulique de tuyauteries selon l'une au moins des revendications précédentes, caractérisé en ce qu'un curseur coulisse longitudinalement sur le tube de guidage (4) et/ou le corps d'arrêt (6).

8. Dispositif de fermeture hydraulique de tuyauteries selon l'une au moins des revendications précédentes, caractérisé en ce que le tube de guidage (4) est flexible.

9. Dispositif de fermeture hydraulique de tuyauteries selon l'une au moins des revendications précédentes, caractérisé en ce que l'accessoire est fermé à une extrémité au moyen d'un couvercle et d'une garniture d'étanchéité, le tube de guidage (4) étant guidé coulissant longitudinalement, au centre, à travers le couvercle et la garniture d'étanchéité.

10. Dispositif de fermeture hydraulique de tuyauteries selon l'une au moins des revendications précédentes, caractérisé en ce que le corps d'arrêt (6) est fixé sur la barre qui de son côté est vissée sur le tube de guidage (4), au moyen d'une tige filetée.

FIGUR 1

FIGUR 2

FIGUR 3